# EUROPÄISCHE PATENTSCHRIFT

(11) **EP 0 861 424 B1**
(45) Veröffentlichungstag und Bekanntmachung des Hinweises auf die Patenterteilung: **04.10.2001**
(21) Anmeldenummer: 96938175.5
(22) Anmeldetag: 12.11.1996
(51) Int. Cl.: G01J 5/04, G01K 1/08, A61B 5/00

(54) **INFRAROT-STRAHLUNGSTHERMOMETER**
INFRARED RADIATION THERMOMETER
THERMOMETRE A RAYONNEMENT INFRAROUGE

(30) Priorität: 18.11.1995 DE 19543096
(43) Veröffentlichungstag der Anmeldung: 02.09.1998
(73) Patentinhaber: Braun GmbH, Kronberg (DE)
(72) Erfinder: JESTÄDT, Albrecht, D-61381 Friedrichsdorf (DE); BÜLTGES, Heinz, D-65817 Eppstein (DE); BEERWERTH, Frank, D-65594 Runkel-Ennerich (DE)
(86) Internationale Anmeldenummer: EP9604933
(87) Internationale Veröffentlichungsnummer: WO9719332

(56) Entgegenhaltungen:
- EP-A- 0 024 717
- EP-A- 0 445 784
- EP-A- 0 472 490
- EP-A- 0 502 277
- EP-A- 0 565 123
- WO-A-95/00067
- US-A- 5 169 235

## Beschreibung

Die vorliegende Erfindung betrifft ein Infrarot-Strahlungsthermometer, insbesondere ein Ohr-Fieberthermometer, bei dem ein Sensor für die Erfassung von infraroter Strahlung, dem eine elektronische Auswerteeinrichtung zugeordnet ist, in einem Gehäuse mit einer Strahlungseintrittsöffnung angeordnet ist, wobei zur Temperaturmessung die Strahlungseintrittsöffnung mit einer für infrarote Strahlung ausreichend transparenten, abnehmbaren Meßkappe abgedeckt wird, und wobei der Betriebszustand einer fehlenden Meßkappe durch einen Sensor erfaßt wird, der nach Einschalten des Thermometers ein Warnsignal auslöst.

Infrarot-Strahlungsthermometer der vorstehend angegebenen Art werden zur Körpertemperaturmessung sowohl für den Hausgebrauch als auch im ärztlichen/medizinischen Bereich eingesetzt. Typischerweise besteht ein solches Strahlungsthermometer aus einem Gehäuse mit einem Strahleintrittsfenster, einem Lichtleiter oder einer Sammeloptik und einem Infrarot-Sensor, der mit einer elektronischen Auswerteeinheit verbunden ist. Das Strahleintrittsfenster dient dazu, das Innere des Gehäuses des Strahlungsthermometers abzuschließen und dadurch die Optik und den Infrarot-Sensor gegen Verschmutzung und Zerstörung zu schützen.

Um insbesondere die Übertragung von Krankheiten durch mangelnde Reinigung zu verhindern, ist man dazu übergegangen, das Eintrittsfenster, das aus einem fest mit der Infrarotoptik verbundenen Fensterteil besteht, mit einer Meßkappe zu überziehen und so vor Schmutz zu schützen. Die Meßkappe kann so leicht ausgetauscht werden und besteht vorteilhafterweise aus einem Tiefziehformteil, das die Infrarotstrahlung gut transmittiert und das aus einem sehr dünnen Lichteintrittsbereich, beispielsweise in Form einer Folie oder eines folienartigen Teils, besteht.

Um die vorstehend angeführten Messungen ohne eine Meßkappe zu vermeiden, sind bekannte Ohr-Fieberthermometer mit einer Auswerteeinrichtung versehen worden, die beispielsweise ein Fehlen einer Meßkappe erfaßt und mittels einer Anzeigeeinrichtung anzeigt. So ist beispielsweise aus der EP-A-O 565 123 ein Infrarot-Strahlungsthermometer bekannt, bei dem eine Messung ohne aufgesetzte Meßkappe nicht möglich ist.

Ausgehend von dem beschriebenen Stand der Technik liegt der vorliegenden Erfindung die Aufgabe zugrunde, ein Infrarot-Strahlungsthermometer der eingangs angegebenen Art anzugeben, das eine Bedienungsperson auf eine Fehlbedienung des Geräts vor seinem Gebrauch hinweist.

Die vorstehende Aufgabe wird, ausgehend von dem eingangs beschriebenen Infrarot-Strahlungsthermometer, durch die Merkmale des Anspruchs 1 oder 2 gelöst.

Bei Benutzung des Thermometers ohne aufgesetze Meßkappe wird gemäß den Merkmalen des Patentanspruchs 1 zwar die Temperatur erfaßt, es erfolgt aber ein Warnsignal, das auf eine Reinigung des Geräts hinweist, sofern die erfaßte Temperatur im Temperaturbereich der Körpertemperatur liegt. Durch Anwendung dieser Bedingung führen alle anderen Messungen, die außerhalb dieses Temperaturbereichs liegen nicht zum Auslösen eines Warnsignals, d.h., von diesen Messungen wird vorausgesetzt, daß sie beispielsweise an der Haut oder sonstigen Oberflächen des Menschen vorgenommen wurden, wodurch die Strahleneintrittsöffnung oder die Meßkappe in der Regel nicht verschmutzt werden. Der Temperaturbereich, der zwischen 36,5 und 37,5° C liegt, kann nämlich nur in einer Körperhöhle des Menschen, insbesondere im Ohrkanal, gemessen werden. Alle anderen Temperaturmessungen an der Oberfläche des menschlichen Körpers liegen unterhalb dieses Temperaturbereichs. Auf diese Weise wird eine Bedienungsperson darauf hingewiesen, daß das Infrarot-Fieberthermometer ohne Meßkappe verwendet wurde und daß eine Reinigung vor weiteren Messungen erforderlich ist. Hierdurch wird auf die Gefahr von Fehlmessungen durch eventuelle Verschmutzung der Optik hingewiesen.

Gemäß den Merkmalen des Patentanspruchs 2 soll auch dann ein Warnsignal ausgelöst werden, wenn eine bereits benutzt Meßkappe für eine weitere Messung verwendet würde. Hierdurch wird der Benutzer auf die Notwendigkeit eines Wechsels der Meßkappe hingewiesen, um so mögliche Krankheitsübertragungen zu vermeiden. Wird also der Sensor von einer Meßkappe betätigt, anschließend gemessen und später nochmals gemessen, ohne daß der Sensor einen weiteren Impuls empfangen hat, so wird ein Warnsignal ausgelöst, um den Benutzer auf die doppelte Benutzung der Meßkappe hinzuweisen. Voraussetzung für die Abgabe eines Warnsignals ist dabei ebenfalls, daß die gemessene Temperatur im Bereich der Körpertemperatur des Menschen liegt.

Das Gerät erkennt also durch einen von der Meßkappe betätigten Schalter, ob bei der vorliegenden Messung eine Meßkappe montiert ist oder nicht und wenn ja, prüft es bei der nächsten Messung ob der Schalter durch Wechsel der Meßkappe erneut betätigt wurde. Wird der Schalter gar nicht betätigt, weiß das Gerät, daß keine Meßkappe auf das Gerät aufgezogen wurde. In diesem Fall wird ein erstes und anschließend nach der Messung ein zweites Warnsignal ausgelöst. Wurde der Schalter zwischen einer ersten und einer zweiten Messung nicht betätigt, obwohl eine Meßkappe aufgesetzt ist, weiß das Gerät, daß die Meßkappe nicht ausgewechselt wurde. In diesem Fall wird nach der Messung das zweite Warnsignal ausgelöst.

Nach den Merkmalen des Anspruchs 3 aktiviert das Warnsignal eine Anzeige, durch die der Benutzer auf die Reinigung der Strahlungseintrittsöffnung hingewiesen wird.

Gemäß den Merkmalen des Anspruchs 4 gibt die Anzeige ein Lichtsignal oder ein akustisches Signal ab. Die Warnung kann aber beispielsweise auch mittels einer roten Lampe erfolgen, vor der sich ein sinngemäßer Schriftzug befindet.

Gemäß den Merkmalen des Patentanspruchs 5 werden diejenigen Messungen, die zum Auslösen des Warnsignals führen, nicht an der Anzeigeeinrichtung angezeigt. Dies hat den Vorteil, daß eine Bedienungsperson beim nächsten Mal nach Abgabe des Warnsignals gar nicht mehr versucht die Strahlungseintrittsöffnung in das Ohr hineinzuführen, da ohnehin keine Temperaturanzeige erfolgt.

Durch die Merkmale des Patentanspruchs 6 wird erreicht, daß nach dem Warnsignal nur noch mit ausdrücklicher Betätigung eines zusätzlichen Schalters eine weitere Temperaturmessung möglich ist. Eine Bedienungsperson weiß also dann, daß sie das Gerät hätte reinigen oder eine neue Meßkappe hätte aufsetzen müssen. Diese Anordnung hat weiterhin den Vorteil, daß, wenn beispielsweise keine Meßkappen im Hause sind, dennoch eine weitere Temperaturmessung möglich ist, wenn das Fieber einer Person bedrohlich angestiegen ist.

Durch die Merkmale des Patentanspruchs 7 wird von dem Sensorsignal bei einer fehlenden Meßkappe ein weiteres Warnsignal ausgelöst. Dieses Warnsignal wird immer dann ausgelöst, wenn generell eine Meßkappe fehlt. Dieses weitere Warnsignal erfolgt immer vor dem nach der Auslösung der Temperaturmessung abgegebenen Warnsignal. Durch die beiden Warnsignale wird also eine Bedienungsperson sowohl vor als auch nach der Messung auf eine Fehlbedienung hingewiesen.

Um dem Benutzer nach dem Einschalten des Thermometers ausreichend Zeit zu belassen, eine Meßkappe auf das Gerät aufzusetzen, oder aber im Falle eines Wechsels einer vorhandenen Meßkappe, die der Benutzer vor der Anwendung des Fieberthermometers gegen eine neue Meßkappe auswechseln möchte, sind die Merkmale des Anspruchs 8 vorgesehen. Dabei wird ein Warnsignal erst nach einer bestimmten, gegebenenfalls einstellbaren, Verzögerungszeit ausgelöst. Hierfür sind beispielweise Verzögerungszeiten von 3 bis 5 Sekunden ausreichend. Falls nach dem Ablauf einer solchen Verzögerungszeit weiterhin ein Fehlen der Meßkappe ermittelt wird, wird dem Benutzer durch das Warnsignal signalisiert, eine Meßkäppe auf das Fieberthermometer aufzusetzen. Wird eine Meßkappe nach dem Warnsignal aufgesetzt, so erlöscht dieses anschließend.

Durch die Merkmale des Patentanspruchs 9 wird erreicht, daß, sobald das Gerät ausgeschaltet wird, dennoch die Daten in der Auswerteeinrichtung gehalten werden und daß beim nächsten Einschalten des Gerätes diese Daten weiter verwertet werden. Dies bedeutet, daß, wenn das Gerät nach einer Temperaturmessung ausgeschaltet wird, die Meßkappe aber nicht gewechselt wird, beim nächsten Einschalten das weitere Warnsignal ausgelöst wird, das auf einen Wechsel der Schutzkappe hinweist. Erfolgt kein Wechsel, so wird nach der Temperaturmessung ein Warnsignal ausgelöst, das auf eine Reinigung der Strahlungseintrittsöffnung bzw. auf einen Wechsel der Meßkappe hinweist, allerdings dies nur dann, wenn die Temperatur im Bereich der Körpertemperatur des Menschen liegt.

Die Meßkappe kann beispielsweise aus einer dünnen Einwegfolie aus für Infrarotlicht durchgängigem Polyethylen gebildet werden.

Das Temperaturmeßgerät kann so ausgebildet sein, daß auf die Strahlungseintrittsöffnungnung eine Meßkappe und darauf wiederum eine Schutzkappe aufgesetzt werden kann. Von diesen beiden Kappen ist in einem solchen Fall die Meßkappe eine Einwegkappe, die vor jeder Temperaturmessung ausgetauscht werden muß, während die Schutzkappe eine Hülse ist, die bei Nichtgebrauch des Gerätes zum Schutz der Optik aufgesetzt wird. Die Schutzkappe ist erheblich dicker als die Meßkappe, und kann daher auch einige Stöße abhalten, ohne daß die Optik beschädigt wird.

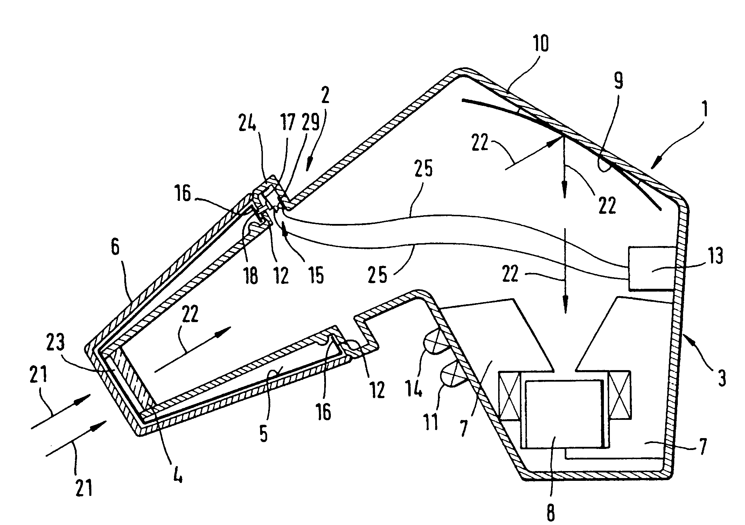

Ein Ausführungsbeispiel der Erfindung wird nachfolgend unter Bezugnahme auf die einzige Figur beschrieben.

Das Infrarot-Strahlungsthermometer, wie es gezeigt wird, weist ein abgewinkeltes Gehäuse 1 mit einem vorderen Gehäuseabschnitt 2 und einem hinteren Gehäuseabschnitt 3 auf. Der vordere Gehäuseabschnitt 2, der sich zu einer Strahlungseintrittsöffnung 23 hin konisch verjüngt, besitzt an seiner Strahlungseintrittsöffnung 23 ein Fenster 4, das zur Messung mit der Meßkappe 5 abgedeckt wird. Der hintere Bereich der Meßkappe 5 ist derart dimensioniert, daß er zur Messung der Temperatur einer Person in deren Ohrkanal (nicht dargestellt) ohne großen Druck auf das Ohr auszuüben - und dies sowohl bei Kindern wie bei Erwachsenen - eingesetzt werden kann. Die Meßkappe 5 besteht aus einer dünnen Polyethylenfolie, die sich insbesondere über das Fenster 4 erstreckt und die zur Messung der Temperatur für Infrarotstrahlen durchlässig ist.

Zur Lagerung des Thermometers kann entweder auf die Meßkappe 5 eine Schutzkappe 6, wie hier dargestellt, oder direkt auf den Gehäuseabschnitt 2 (nicht dargestellt) eine Schutzkappe 6 (ohne Meßkappe) aufgesetzt werden, die zur Vermeidung von Verschmutzung im inneren Bereich einen geringen Abstand zur Meßkappe aufweist. Es ist aber auch denkbar, das Gerät nur mit der Meßkappe (5) abzulegen.

In dem hinteren Gehäuseabschnitt 3 ist, in Haltern 7 gehalten, ein Infrarot-Sensor 8 angeordnet. Um die Strahlung, die über das Fenster 4 in das Innere des Gehäuses 1 eintritt, auf den Infrarot-Sensor 8 zu führen, ist eine Reflexionseinheit 9 an einer hinteren Gehäusewand 10 befestigt. Der Infrarot-Sensor 8 ist vorzugsweise als pyroelektrischer Sensor ausgebildet. In einer weiteren Ausführungsform ist der Infrarot-Sensor 8 als Thermopile-Sensor ausgebildet.

Das Infrarot-Fenster 4 ist so ausgewählt, daß infrarote Strahlung, gekennzeichnet durch die Pfeile 22, im für die Temperatur relevanten Wellenlängenbereich in das Gehäuse 1 eintritt. Bei Raumtemperatur liegt dieser Bereich zwischen 5 *µ*m und 15 *µ*m. Ein solches Fenster 4 ist beispielsweise aus einer Polyethylenscheibe hergestellt. Die Meßkappe 5 dient hierbei als Schutzfolie für das Fenster 4, die vor jeder Temperaturmessung neu aufgebracht und nach jeder Messung wieder entfernt wird, damit eine bereits benutzte Meßkappe 5 nicht nochmals von einer anderen Person benutzt werden muß. Durch die Meßkappe 5 wird das Infrarot-Thermometer im Bereich des vorderen Gehäuseabschnitts 2 in einem sauberen Zustand gehalten.

Für exakte Temperaturmessungen ist es wichtig, daß das Gerät nur mit der Meßkappe 5, die das Fenster 4 abdeckt, verwendet werden kann. Die Meßkappe 5, die das Fenster 4 abdeckt oder in dem Fall, in dem kein Fenster 4 vorhanden ist, den Innenraum des Gehäuses 1 abschließt, dient dazu, daß die entsprechenden optischen Teile gegen Verschmutzung geschützt werden. Die Verschmutzung kann einerseits durch Staub, sonstigen Schmutz oder Feuchtigkeitseinwirkung und andererseits durch Ohrenschmalz eintreten. Durch den ständigen Wechsel der Meßkappe 5 durch eine neue Meßkappe 5 (nach Gebrauch) muß eine andere Person nicht eine verschmutzte Meßkappe 5 in ihr Ohr einführen. Wie in der Figur zu sehen ist, ist die Meßkappe 5 leicht austauschbar, indem sie von dem vorderen Gehäuseabschnitt 2 abgezogen wird und durch eine neue Meßkappe 5 ersetzt wird. Die Meßkappe 5 ist als Einwegartikel von Temperaturmessung zu Temperaturmessung vorgesehen.

Um dem Benutzer nach dem Einschalten des Thermometers ausreichend Zeit zu belassen, eine Meßkappe 5 auf das Gerät aufzusetzen, oder aber im Falle eines Wechsels einer vorhandenen Meßkappe 5, die der Benutzer vor der Anwendung des Fieberthermometers gegen eine neue Meßkappe 5 auswechseln möchte, schaltet das Gerät erst nach einer vorgegebenen Zeit auf betriebsbereit. Dabei wird ein Warnsignal 14 erst nach einer bestimmten, gegebenenfalls einstellbaren, Verzögerungszeit ausgelöst, wenn keine oder dieselbe Meßkappe verwendet werden soll. Hierfür sind beispielsweise Verzögerungszeiten von 3 bis 5 Sekunden ausreichend. Falls nach dem Ablauf einer solchen Verzögerungszeit weiterhin ein Fehlen der Meßkappe 5 ermittelt wird, wird dem Benutzer durch das erste Warnsignal 14 signalisiert, eine Meßkappe 5 auf die Strahlungseintrittsöffnung 4 bzw. auf das vordere Gehäuseteil 2 aufzusetzen.

Damit dieses Ohr-Fieberthermometer nicht ohne die aufgesetzte Meßkappe 5 eingesetzt wird, ist an dem vorderen Gehäuseabschnitt 2 ein ringförmiger Anschlag 24 angeordnet, an den sich das stirnseitige Ende 12 der Meßkappe 5 anlegt. Dieser ringförmige Anschlag 24 weist einen elektrischen Schalter 15 auf, der beim Anlegen der Meßkappe 5 durch ihren Ringbund 16 geschlossen wird, so daß dadurch ein elektrisches Signal erzeugt wird, das über die Leitungen 25 der nicht näher dargestellten, dem Infrarot-Sensor 8 elektrisch zugeordneten Auswerteeinheit 13 zugeführt wird. Die eine Kontaktfahne 17 des Schalters 15 ist mit einem verschiebbaren Stößel 18 verbunden, der beim Aufsetzen der Meßkappe 5 durch ihren Ringbund 16 verschoben wird und die Kontaktfahne 17 mit der Kontaktfahne 29 verbindet, d.h., den Schalter 15 kurzschließt, um so ein elektrisches Signal zu erzeugen, durch das weder das Leuchtsignal 14 noch ein akustisches Signal (nicht dargestellt) ausgelöst wird. Der Schalter 15 ist vorzugsweise ein Mikroschalter. Er kann aber auch durch einen Magnet-Schalter oder einen weiteren optischen Sensor ersetzt werden, durch den ebenso ein elektrisches Signal beim Aufsetzen der Meßkappe 5 erzeugt wird. Das Warnsignal ist nach der Erfindung ein optisches oder akustisches Signal, beispielsweise eine Leuchtdiode 14, wie in der Figur dargestellt, oder ein Piezosummer (nicht dargestellt).

Die Lampe leuchtet so hell, daß eine Bedienungsperson auch bei Sonnenschein das Leuchten erkennt und so auf das Fehlen einer Meßkappe 5 hingewiesen wird. Entsprechend gilt dies auch für die Lautstärke des akustischen Signals.

Ist keine Meßkappe 5 aufgesetzt, so löst der elektrische Schalter 15 in diesem Ausführungsbeispiel kein elektrisches Signal für "Meßkappe aufgesetzt" in der Auswerteeinheit 13 aus, was dazu führt, daß die Lampe oder Leuchtdiode 14 deutlich aufleuchtet oder blinkt. Hierduch wird einer Bedienungsperson angezeigt, daß keine Meßkappe 5 auf dem Gehäuseabschnitt 2 aufgeschoben ist oder daß die Meßkappe 5 nicht ordnungsgemäß auf dem vorderen zylindrischen Gehäuseabschnitt 2 aufgesetzt ist, so daß keine richtige Temperaturmessung erfolgt. Wenn der hierbei ermittelte Temperaturwert etwa im Bereich der Körpertemperatur des Menschen liegt, wird ein über die Auswerteeinrichtung 13 erzeugtes weiteres Warnsignal 11, das beispielsweise ebenso als Leuchtdiode ausgebildet ist, ausgegeben. Während demnach die Leuchtdiode 14 allgemein anzeigt, daß keine Meßkappe aufgesetzt ist, signalisiert die Leuchtdiode 11 der Bedienungsperson, daß eine Messung im Bereich der Körpertemperatur ohne Meßkappe 5 erfolgte, und daher zusätzlich zur Information, daß der Meßwert unkorrekt ist, die Information, daß eine Reinigung der Strahleneintrittsöffnung 4 notwendig ist, um eine nachfolgend verfälschte Temperaturmessung, z.B. mit Meßkappe 5, zu vermeiden.

Andererseits wird auch dann ein Warnsignal 11 ausgegeben, wenn zwar ein sinnvoller Temperaturwert, der größer als z.B. 36,5° C ist, gemessen wurde, jedoch keine neue Meßkappe 5 verwendet wurde. In diesem Fall zeigt das Warnsignal 11 an, daß der elektrische Schalter 15 keinen Meßkappenwechsel registrierte und somit hygienische Vorbehalte bestehen bzw. die Messung durch die Meßkappenverschmutzung eventuell verfälscht ist.

In einer weiteren Ausführungsform wird das Warnsignal 11 für eine mehrfach benutzte Meßkappe 5 von einer dritten Einrichtung ausgegeben. Die dritte Einrichtung ist z.B. als dritte Leuchtdiode oder dritte Signalart ausgebildet, so daß eine Unterscheidung vom Warnsignal 11 für eine Temperaturmessung im Bereich der Körpertemperatur bei nicht aufgesetzter Meßkappe 5 möglich ist.

In Weiterbildungen dieser Ausführungsform ist der elektrische Schalter 15 mit der Ein/Aus-Schaltfunktion des Infrarot-Strahlungsthermometers gekoppelt, so daß sich das Gerät automatisch mit dem Abnehmen der Schutzkappe 6 einschaltet. In diesem Fall detektiert der elektrische Schalter 15 sowohl das Vorhandensein der Schutzkappe 6 als auch der Meßkappe 5.

Alternativ hierzu sieht eine zweite Ausführungsform zwei Sensoren vor, die unabhängig voneinander einerseits der Meßkappendetektion und der Schutzkappendetektion zugeordnet sind. In vorteilhafter Weiterbildung ist dann der Sensor bzw. elektrische Schalter (in der Figur nicht dargestellt) für das Vorhandensein der Schutzkappe 6 gleichzeitig mit einem Geräte-Ein/Aus-Schalter verbunden, so daß mit dem Abnehmen der Schutzkappe 6 das Gerät eingeschaltet wird.

In einer Weiterbildung gibt mittels einer elektrischen Verbindung zwischen dem Sensor für die Schutzkappe 6 und der Auswerteeinheit 13 der Sensor an die Auswerteeinheit 13 ein elektrisches Signal, das nach einer festgelegten Zeitdauer ein weiteres Warnsignal aktiviert, um einen fehlerhaften Status an der Strahleneintrittsöffnung (verschmutzt), an der Meßkappe 5 (nicht vorhanden oder mehrfach benutzt) oder das Fehlen der Schutzkappe 6 anzuzeigen. Dies ist erforderlich, um einer Verschmutzung oder Beschädigung der ungeschützten Strahleneintrittsöffnung 4 während der Lagerung zu verhindern. Sind für die Schutzkappe 6 und für die Meßkappe 5 separate Sensoren vorgesehen, so werden unterschiedliche Zeitdauern bis zur Auslösung eines Warnsignals festgelegt.

Um zu detektieren, ob der Meßbereich des Infrarot-Thermometers in das Ohr eingeführt wurde, ohne daß eine Temperaturmessung veranlaßt wurde, ist in einer weiteren Ausführungsform ein Stromsparmodus vorgesehen, der es erlaubt, fortdauernd oder in kurzen zeitlichen Abständen automatisch eine Temperaturmessung auszuführen. Wird hierbei eine Temperatur im Bereich der Körpertemperatur gemessen, obwohl keine Meßkappe 5 aufgesetzt ist oder mit der Meßkappe bereits eine Messung im Körpertemperaturbereich erfolgte, so gibt die Auswerteeinheit 13 ein Warnsignal 11 aus.

## Patentansprüche

1. Infrarot-Strahlungsthermometer zur Messung der Körpertemperatur des Menschen, insbesondere Ohr-Fieberthermometer, mit einem Gehäuse (1), das eine Strahlungseintrittsöffnung (4) aufweist, die mit einer für infrarote Strahlung ausreichend transparenten, abnehmbaren Meßkappe (5) abdeckbar ist, mit einem im Gehäuse (1) angeordneten Infrarot-Sensor (8), dem eine elektronische Auswerteeinrichtung (13) zugeordnet ist, mit einer Anzeigeeinrichtung für Temperaturmeßwerte, und mit einem weiteren Sensor (15), der die Zustände "aufgesetzte" und "nicht aufgesetzte" Meßkappe (5) erfaßt und ein entsprechendes Signal der Auswerteeinrichtung (13) zuführt,
**dadurch gekennzeichnet,**
**daß** für den Fall, daß ohne aufgesetzte Meßkappe (5) ein Temperaturwert ermittelt wird, der im Bereich der Körpertemperatur des Menschen liegt, von der Auswerteeinrichtung (13) ein Warnsignal erzeugt wird.

2. Infrarot-Strahlungsthermometer zur Messung der Körpertemperatur des Menschen, insbesondere Ohr-Fieberthermometer, mit einem Gehäuse (1), das eine Strahlungseintrittsöffnung (4) aufweist, die mit einer für infrarote Strahlung ausreichend transparenten, abnehmbaren Meßkappe (5) abdeckbar ist, mit einem im Gehäuse (1) angeordneten Infrarot-Sensor (8), dem eine elektronische Auswerteeinrichtung (13) zugeordnet ist, mit einer Anzeigeeinrichtung für Temperaturmeßwerte, und mit einem weiteren Sensor (15), der die Zustände "aufgesetzte" und "nicht aufgesetzte" Meßkappe (5) erfaßt und ein entsprechendes Signal der Auswerteeinrichtung (13) zuführt,
**dadurch gekennzeichnet,**
**daß** für den Fall, daß bei einer ersten Messung ein Temperaturwert ermittelt worden ist, der im Bereich der Körpertemperatur des Menschen liegt, und bei weiter aufgesetzter Meßkappe (5) bei einer folgenden zweiten Messung ein im gleichen Bereich liegender Temperaturwert ermittelt wird, von der Auswerteeinrichtung (13) ein Warnsignal erzeugt wird.

3. Infrarot-Strahlungsthermometer nach Anspruch 1 oder 2,
**dadurch gekennzeichnet,**
**daß** das Warnsignal eine auf die Notwendigkeit der Reinigung der Strahleneintrittsöffnung (4) hinweisende Anzeige (11) aktiviert.

4. Infrarot-Strahlungsthermometer nach Anspruch 3,
**dadurch gekennzeichnet,**
**daß** die Anzeige (11) ein optisches oder akustisches Signal abgibt.

5. Infrarot-Strahlungsthermometer nach Anspruch 1 oder 2,
**dadurch gekennzeichnet,**
**daß** diejenigen Temperaturmessungen, die zum Auslösen des Warnsignals führen, nicht an der Anzeigeeinrichtung ausgegeben werden.

6. Infrarot-Strahlungsthermometer nach Anspruch 1 oder 2,
**dadurch gekennzeichnet,**
**daß** nach Abgabe des Warnsignals eine weitere Messung nur nach Betätigen eines besonderen Schalters möglich ist.

7. Infrarot-Strahlungsthermometer nach einem der vorherigen Ansprüche,
**dadurch gekennzeichnet,**
**daß** ein weiteres Warnsignal (14) ausgelöst wird, wenn der weitere Sensor (15) den Zustand "nicht aufgesetzte" Meßkappe (5) detektiert.

8. Infrarot-Strahlungsthermometer nach Anspruch 4,
**dadurch gekennzeichnet,**
**daß** nach dem Abnehmen einer Meßkappe (5) das weitere Warnsignal (14) "nicht aufgesetzte" Meßkappe (5) erst nach einer solchen Verzögerungszeit ausgelöst wird, die ausreicht, um eine neue Meßkappe (5) aufzusetzen.

9. Infrarot-Strahlungsthermometer nach einem der vorherigen Ansprüche,
**dadurch gekennzeichnet,**
**daß** nach Ausschalten des Gerätes weiterhin das vom weiteren Sensor (15) abgegebene Signal in der Auswerteeinrichtung (13) erfaßt und bei Einschalten des Geräts weiter verwertet wird.

10. Infrarot-Strahlungsthermometer nach einem der vorherigen Ansprüche,
**dadurch gekennzeichnet,**
**daß** es eine Schutzkappe (6) und einen Sensor aufweist, der die Zustände "aufgesetzte" und "nicht aufgesetzte" Schutzkappe (6) erfaßt und ein entsprechendes Signal der Auswerteeinrichtung (13) zuführt.

11. Infrarot-Strahlungsthermometer nach Anspruch 10,
**dadurch gekennzeichnet,**
**daß** die Auswerteeinrichtung (13) das Infrarot-Strahlungsthermometer einschaltet, wenn der Sensor eine nicht aufgesetzte Schutzkappe detektiert.

## Claims

1. An infrared radiation thermometer for measuring human body temperature, in particular a tympanic thermometer, with a housing (1) having a window (4) for admitting radiation, said window being adapted to be covered with a detachable probe cover (5) sufficiently transparent to infrared radiation, with an infrared sensor (8) arranged in the interior of the housing (1) and being associated with an electronic evaluation unit (13), with a device for indicating measured temperature values, and with a further sensor (15) detecting the conditions probe cover (5) "installed" and "not installed" and delivering a corresponding signal to the evaluation unit (13),
**characterized in that** said evaluation unit (13) generates a warning signal when, without a probe cover (5) installed, a temperature value is established that lies within the range of the human body temperature.

2. An infrared radiation thermometer for measuring human body temperature, in particular a tympanic thermometer, with a housing (1) having a window (4) for admitting radiation, said window being adapted to be covered with a detachable probe cover (5) sufficiently transparent to infrared radiation, with an infrared sensor (8) arranged in the interior of the housing (1) and being associated with an electronic evaluation unit (13), with a device for indicating measured temperature values, and with a further sensor (15) detecting the conditions probe cover (5) "installed" and "not installed" and delivering a corresponding signal to the evaluation unit (13),
**characterized in that** said evaluation unit (13) generates a warning signal in the event that a first measurement yields a temperature value lying within the range of human body temperature, and, with the probe cover (5) continuing to be installed, in the event of a subsequent second measurement yielding a temperature value lying within the same range.

3. The infrared radiation thermometer as claimed in claim 1 or 2,
**characterized in that** the warning signal (11) activates an indicating device (11) indicative of the need to clean the IR window (4).

4. The infrared radiation thermometer as claimed in claim 3,
**characterized in that** the indicating device (11) delivers a visual or audible signal.

5. The infrared radiation thermometer as claimed in claim 1 or 2,
**characterized in that** those temperature measurements that give rise to the issuance of the warning signal are not output on the indicating device.

6. The infrared radiation thermometer as claimed in claim 1 or 2,
**characterized in that** upon issuance of the warning signal a further measurement is only possible upon actuation of a particular switching device.

7. The infrared radiation thermometer as claimed in any one of the preceding claims,
**characterized in that** a further warning signal (14) is issued in the event of the further sensor (15) detecting the condition probe cover (5) "not installed".

8. The infrared radiation thermometer as claimed in claim 4,
**characterized in that** upon removal of a probe cover (5) the further warning signal (14) probe cover (5) "not installed" is not released until after a delay interval sufficient to substitute a new probe cover (5).

9. The infrared radiation thermometer as claimed in any one of the preceding claims,
**characterized in that** upon turning off the instrument the signal issued by the further sensor (15) continues to be held in the evaluation unit (13) and is used for further evaluation after the instrument is turned on again.

10. The infrared radiation thermometer as claimed in any one of the preceding claims,
**characterized in that** it includes a protective cap (6) and a sensor detecting the conditions protective cap (6) "installed" and "not installed" and delivering a corresponding signal to the evaluation unit (13).

11. The infrared radiation thermometer as claimed in claim 10,
**characterized in that** the evaluation unit (13) activates the infrared radiation thermometer when the sensor detects a removed protective cap.

## Revendications

1. Thermomètre à rayonnement infrarouge pour la mesure de la température du corps humain, notamment thermomètre médical auriculaire, comportant un boîtier (1), qui possède une ouverture (4) d'entrée du rayonnement qui peut être fermée par un capuchon de mesure amovible (5), qui transmet suffisamment le rayonnement infrarouge, un détecteur d'infrarouge (8) disposé dans le boîtier (1) et auquel est associé un dispositif d'évaluation électronique (13), comportant un dispositif d'affichage pour des valeurs de mesure de température, et un autre capteur (15), qui détecte les états "mis en place" et "non mis en place" du capuchon de mesure (5) et envoie un signal correspondant au dispositif d'évaluation (13),
**caractérisé en ce**
**que** dans le cas où une valeur de température, qui se situe dans la gamme de températures du corps humain, est déterminée sans mise en place du capuchon de mesure (5), un signal d'avertissement est produit par le dispositif d'évaluation (13).

2. Thermomètre à rayonnement infrarouge pour la mesure de la température du corps humain, notamment thermomètre médical auriculaire, comportant un boîtier (1), qui possède une ouverture (4) d'entrée du rayonnement qui peut être fermée par un capuchon de mesure amovible (5), qui transmet suffisamment le rayonnement infrarouge, un détecteur d'infrarouge (8) disposé dans le boîtier (1) et auquel est associé un dispositif d'évaluation électronique (13), comportant un dispositif d'affichage pour des valeurs de mesure de température, et un autre capteur (15), qui détecte les états "mis en place" et "non mis en place" du capuchon de mesure (5) et envoie un signal correspondant au dispositif d'évaluation (13),
**caractérisé en ce que** dans le cas où, lors d'une première mesure, une valeur de température qui se situe dans la gamme de températures du corps humain a été déterminée et, alors que le capuchon de mesure (5) est en outre mis en place, lors d'une seconde mesure suivante une valeur de température située dans la même gamme est déterminée, un signal d'avertissement est produit par le dispositif d'évaluation (13).

3. Thermomètre à rayonnement infrarouge selon la revendication 1 ou 2, **caractérisé en ce**
**que** le signal d'avertissement active un dispositif indicateur (11), qui indique la nécessité d'un nettoyage de l'ouverture (4) d'entrée du rayonnement.

4. Thermomètre à rayonnement infrarouge selon la revendication 3, **caractérisé en ce**
**que** le dispositif indicateur (11) délivre un signal optique ou acoustique.

5. Thermomètre à rayonnement infrarouge selon la revendication 1 ou 2, **caractérisé en ce que** les mesures de température, qui conduisent au déclenchement du système d'avertissement, ne sont pas délivrées au dispositif indicateur.

6. Thermomètre à rayonnement infrarouge selon la revendication 1 ou 2, **caractérisé en ce**
**qu'**après la délivrance du signal d'avertissement, une autre mesure est possible uniquement après actionnement d'un commutateur particulier.

7. Thermomètre à rayonnement infrarouge selon l'une des revendications précédentes, **caractérisé en ce qu'**un autre signal d'avertissement (14) est déclenché et lorsque l'autre capteur (15) détecte l'état "non mis en place" du capuchon de mesure (5).

8. Thermomètre à rayonnement infrarouge selon la revendication 4, **caractérisé en ce**
**qu'**après le retrait d'un capuchon de mesure (5), l'autre signal d'avertissement (14) capuchon de mesure (5) "non mis en place" est déclenché uniquement après un temps de retard qui est suffisant pour la mise en place d'un nouveau capuchon de mesure (5).

9. Thermomètre à rayonnement infrarouge selon l'une des revendications précédentes, **caractérisé en ce qu'**après le débranchement de l'appareil, le signal délivré par l'autre capteur (15) est détecté dans le dispositif d'évaluation (13) et en outre ce signal continue à être évalué lors du branchement de l'appareil.

10. Thermomètre à rayonnement infrarouge selon l'une des revendications précédentes, **caractérisé en ce qu'**il possède un capuchon de protection (6) et un capteur, qui détectent les états "mis en place" et "non mis en place" pour le capuchon de protection (6) et envoie un signal correspondant au dispositif d'évaluation (13).

11. Thermomètre à rayonnement infrarouge selon la revendication 10, **caractérisé en ce que** le dispositif d'évaluation (13) branche le thermomètre à rayonnement infrarouge lorsque le capteur détecte le fait que le capuchon de protection n'est pas mis en place.
